# EUROPÄISCHE PATENTSCHRIFT

(11) **EP 0 435 046 B1**
(45) Veröffentlichungstag und Bekanntmachung des Hinweises auf die Patenterteilung: **10.04.1996**
(21) Anmeldenummer: 90123620.8
(22) Anmeldetag: 08.12.1990
(51) Int. Cl.: H04L 12/56

(54) **Verfahren zum Wiederherstellen der richtigen Zellfolge, insbesondere in einer ATM-Vermittlungsstelle, sowie Ausgangseinheit hierfür**
Procedure for reestablishing the original cell sequence, in particular in an ATM switch, as well as output module for that switch
Méthode pour le rétablissement de la séquence des cellules originelles, notamment pour un commutateur ATM, ainsi qu'unité de sortie pour celui-ci

(30) Priorität: 23.12.1989 DE 3942977
(43) Veröffentlichungstag der Anmeldung: 03.07.1991
(73) Patentinhaber: Alcatel SEL Aktiengesellschaft, D-70435 Stuttgart (DE); ALCATEL N.V., NL-1077 XX Amsterdam (NL)
(72) Erfinder: Schrodi, Karl, W-7258 Heimsheim (DE); Eilenberger, Gert, Dr., W-7312 Kirchheim (DE); Wahl, Stefan, W-7251 Hemmingen (DE); Pfeiffer, Bodo, W-7141 Schwieberdingen (DE); Cesar, Bozo, W-7000 Stuttgart 40 (DE)
(74) Vertreter: Brose, Gerhard

(56) Entgegenhaltungen:
- EP-A- 0 215 526
- EP-A- 0 333 226
- EP-A- 0 336 401
- PATENT ABSTRACTS OF JAPAN vol. 005, no. 011 (E-042)23. Januar 1981 &JP-A-55 140 347 (OKI ELECTRIC IND CO LTD) 1.November 1980
- PATENT ABSTRACTS OF JAPAN vol. 013, no. 486 (E-840)6. November 1989& JP-A-1 192 298(NEC CORP) 2.August 1989

## Beschreibung

Die Erfindung betrifft ein Verfahren zum Wiederherstellen der richtigen Folge von Zellen an einem Ausgang eines Systems, nach dem Oberbegriff von Anspruch 1, und eine Ausgangseinheit für ein System, nach dem Oberbegriff von Anspruch 9.

Für die Telekommunikation der Zukunft wird derzeit der sogenannte Asynchronous Transfer Mode (ATM) erforscht und entwickelt. Dies ist ein schnelles Paketübertragungsverfahren; die einzelnen Pakete werden als Zellen bezeichnet. Grundsätzlich ist die vorliegende Erfindung auch auf bisherige (langsame) Paketübertragungsverfahren anwendbar.

Bei der üblichen Zeitmultiplextechnik, die heute auch als Synchronous Transfer Mode bezeichnet wird, wird jede zu übertragende Nachricht in gleich lange Bruchstücke (meist zu 8 Bit) unterteilt und in vorgegebenen äquidistanten Zeitschlitzen in einem Datenstrom zusammen mit Bruchstücken anderer Nachrichten weitergegeben. Alle zur selben Nachricht gehörigen Bruchstücke sind folglich gleich lange unterwegs, kommen in der gleichen Reihenfolge und mit den gleichen Abständen beim Empfänger an und sind durch ihre zeitliche Lage im Datenstrom als zusammengehörig erkennbar. Diese Technik ist vor allem zur Übertragung von Analogsignalen in pulskodemodulierter Form geeignet.

Zur Datenübertragung wurde schon früh zur Pakettechnik übergegangen. Die Daten werden dabei, so wie sie gerade anfallen, in gerade freie Stellen eines Datenstroms eingereiht. Da die Daten nicht anhand ihrer zeitlichen Lage im Datenstrom erkennbar sind, werden sie zusammen mit einem Paketkopf zu einem Paket zusammengefaßt übertragen. Der Paketkopf enthält alle Angaben, die erforderlich sind, den Nachrichtenteil zum richtigen Empfänger zu bringen und ihn dort richtig zuzuordnen. Grundsätzlich könnte dann jedes Paket seinen eigenen Weg durch das Telekommunikationsnetz gehen. Sehr früh wurde aber der Lösungsweg der virtuellen Verbindung eingeschlagen, bei dem alle zur selben Nachricht gehörigen Pakete einen vom ersten Paket vorgezeichneten Weg durch das ganze Netz gehen. Die Paketköpfe, die eine zusätzliche Belastung für das Netz darstellen, können dabei kürzer gehalten werden, weil sie nur die Informationen für jeweils eine Teilstrecke enthalten müssen und unterwegs anhand von Verbindungstabellen die Information für die nächste Teilstrecke erhalten können. Außerdem wird dabei auf einfache Weise vermieden, daß sich zusammengehörige Pakete gegenseitig überholen. Die Daten kommen also mit Sicherheit in derselben Reihenfolge beim Empfänger an, in der sie beim Sender abgingen.

Es gibt nun verschiedene Gründe, zumindest im Koppelnetz einer Vermittlungsstelle von dieser starren Bindung der Zellen einer Nachricht an einen einmal gewählten Weg abzugehen. Ein wesentlicher Punkt der ATM-Technik ist der, daß statistische Schwankungen des Verkehrsaufkommens einzelner Verbindungen zugelassen sind. Wo viele voneinander unabhängige Verbindungen zusammengefaßt werden, tritt ein gewisser Ausgleich dieser Schwankungen ein. Ein weiterer Ausgleich und damit eine recht gleichmäßige Belastung des Netzes tritt dann ein, wenn die einzelnen Zellen einer Verbindung nicht denselben Weg gehen, sondern auf alle möglichen Wege, insbesondere innerhalb des Koppelnetzes einer Vermittlungsstelle, aufgeteilt werden. Dabei kann dann z.B. auf Verkehrsmessungen innerhalb des Koppelnetzes verzichtet werden und die dafür sonst erforderlichen Vorrichtungen sind nicht erforderlich.

Derartige Verbindungen werden, im Gegensatz zu den virtuellen Verbindungen, als "connectionless" bezeichnet. Es besteht aber die Notwendigkeit, spätestens beim Empfänger der Nachricht die ursprüngliche Reihenfolge der Zellen wiederherzustellen, weil hier Überholvorgänge nicht ausgeschlossen sind. Wird eine Verbindung nur innerhalb einer Vermittlungsstelle "connectionless" geführt und sonst virtuell, so erfolgt das Wiederherstellen der Reihenfolge, "resequencing", zweckmäßigerweise am Ausgang dieser Vermittlungsstelle.

Die nicht vorveröffentlichte PCT-Patentanmeldung EP 89/00941 schlägt als Lösung vor, in einer für virtuelle Verbindungen an sich bekannten Weise am Ausgang einer Vermittlungsstelle jede Zelle solange zusätzlich zu verzögern, bis sie gegenüber ihrem Eintritt in die Vermittlungsstelle eine vorgegebene feste Verzögerung aufweist, und sie dann auszugeben. Damit ist zwangsläufig auch die richtige Reihenfolge wieder hergestellt.

Die Forderung, die Verzögerung konstant zu halten, d.h., den "delay jitter" auszugleichen, wird aber in der Regel nicht gestellt. Die Realisierung dieser Forderung setzt voraus, daß den Zellen Zeitmarken ("time stamps") beigegeben werden, was wiederum eine Zentraluhr und ein Netz zum exakten Verteilen der Zeit voraussetzt.

Der Erfindung liegt die Aufgabe zugrunde, Zellen derselben Verbindung, die sich überholt haben können, vor der Weitergabe in die ursprüngliche Reihenfolge zu bringen, ohne dafür eine aufwendige Synchronisation zu benötigen.

Die Aufgabe wird gelöst durch ein Verfahren nach der Lehre des Hauptanspruchs und eine Ausgangseinheit nach der Lehre des Anspruchs 9. Vorteilhafte Ausgestaltungen der Erfindung sind den Unteransprüchen zu entnehmen.

Der Grundgedanke liegt darin, jede Zelle am Ausgang, dort also, wo alle Wege zusammenführen, solange anzuhalten, bis sichergestellt ist, daß keine ältere Zelle mehr unterwegs zwischengespeichert sein kann. Vor der Weitergabe der Zelle wird geprüft, ob unter den später am Ausgang angekommenen Zellen noch eine Zelle ist, die vorher auszugeben ist.

Dies wird vorzugsweise dadurch realisiert, daß eingangsseitig (verbindungsindividuell oder nicht) laufende Nummern an die Zellen vergeben werden und daß ausgangsseitig ein Pufferspeicher vorhanden ist, der mindestens teilweise schieberegisterartig betrieben wird und dadurch eine vorgegebene Verzögerung bewirkt. Vor Ausgabe einer Zelle wird mindestens der schieberegisterartig betriebene Teil des Pufferspeichers daraufhin untersucht, ob eine später eingeschriebene Zelle früher auszugeben ist. Wenn ja, werden die beiden Zellen vertauscht.

Pufferspeicher zum Zwischenspeichern von Zellen mit der Möglichkeit, einzelne Zellen bei der Ausgabe anderen vorzuziehen, sind an sich bekannt, z.B. aus EP-A2-0 333 226.

Im folgenden wird die Erfindung anhand eines Ausführungsbeispiels unter Zuhilfenahme der beiliegenden Zeichnungen weiter erläutert.
- Fig. 1: zeigt das Blockschaltbild einer Ausgangseinheit gemäß der vorliegenden Erfindung,
- Fig. 2: zeigt eine Realisierungsmöglichkeit für den in der Ausgangseinheit nach Fig. 1 enthaltenen Pufferspeicher.

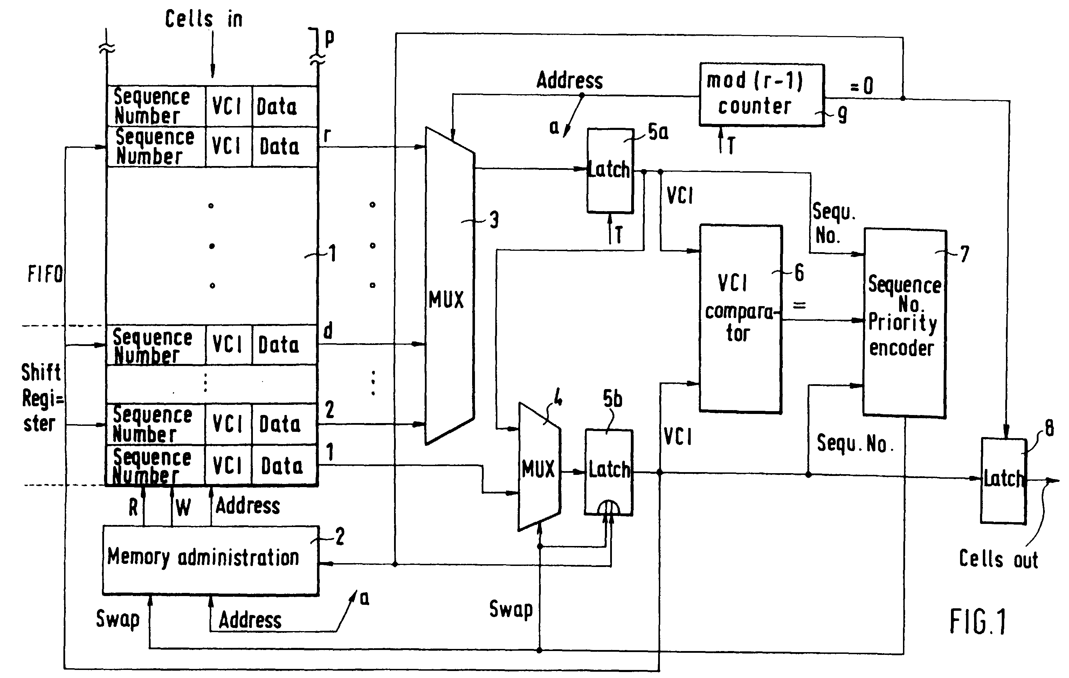

Im Ausführungsbeispiel einer Ausgangseinheit gemäß Fig. 1 wird ein Datenstrom angenommen, der auf Zellbreite parallelisiert ist, bei dem also alle Bits einer Zelle gleichzeitig auf parallelen Leitungen weitergegeben werden. Dies ist in der Regel weder gegeben noch besonders vorteilhaft. Einerseits ist es aber immer möglich, durch Serien-Parallel-Wandler, Parallel-Serien-Wandler und Pufferspeicher einen solchen Datenstrom herzustellen, andererseits liegt es im Bereich fachmännischen Handelns, das vorliegende Ausführungsbeispiel an ein konkret vorgegebenes Datenformat, wie es beispielsweise im Innern einer ATM-Vermittlungsstelle verwendet wird, anzupassen. Dabei wird es dann auch vorteilhaft oder gar notwendig sein, nicht die Zellen selbst im Pufferspeicher zu speichern, sondern nur die Angaben, die zum Umsortieren und Wiederauffinden der in einem separaten Speicher abgespeicherten Zellen notwendig sind. Der Umgang mit indirekter Adressierung ist für jeden Fachmann geläufig. Sie kann auch im gezeigten Beispiel ohne weiteres verwendet werden, wobei dann anstelle der Daten jeweils die Adresse gespeichert wird, unter der die Daten tatsächlich abgespeichert sind.

Die in Fig. 1 dargestellte Ausgangseinheit weist einen Pufferspeicher 1, eine Speicherverwaltungseinheit 2, zwei Multiplexer 3 und 4, zwei Zwischenspeicher 5a und 5b, zwei Vergleicher 6 und 7, einen weiteren Zwischenspeicher 8 und einen Zähler 9 auf.

Der Pufferspeicher 1 weist p Speicherplätze auf. Jeder Speicherplatz ist für die Aufnahme einer vollständigen Zelle vorgesehen. Für die vorliegende Ausgangseinheit von Bedeutung und deshalb in Fig. 1 besonders ausgewiesen ist pro Zelle eine Marke erster Art, Sequence Number, eine Marke zweiter Art, VCI (= Virtual Circuit Identifier) und der Rest der Zelle, Data. Die Darstellung in Fig. 1 gibt den tatsächlichen Speicherplatzbedarf für die einzelnen Teile nicht richtig wieder.

Die Marke erster Art, Sequence Number, muß an einer Stelle des Systems vergeben werden, an der noch alle zur selben Verbindung gehörigen Zellen in der ursprünglichen Reihenfolge vorliegen. Für verschiedene Anwendungszwecke wird bereits beim Endgerät, von dem die Daten ausgehen, jeder Zelle eine laufende Nummer zugefügt. Vorausgesetzt, daß auf diese laufende Nummer jederzeit zugegriffen werden kann, kann sie auch durch die vorliegende Erfindung ausgewertet werden. In der Regel ist es aber von Vorteil, die Marken erster Art am Eingang desjenigen Systems einzufügen, an dessen Ausgang die vorliegend beschriebene Ausgangseinheit liegt. Der bevorzugte Anwendungsbereich ist ein ATM-Vermittlungssystem, so daß die Marken erster Art bevorzugt am Eingang des Vermittlungssystems beigegeben werden.

Die Marken erster Art müssen nicht zwingend innerhalb jeder Verbindung fortlaufend sein. Es genügt auch eine fortlaufende Zählung der Zellen aller Verbindungen, die über denselben Eingang laufen. Bevorzugt wird zur Vergabe dieser Marken ein Modulo-N-Zähler benutzt, wobei N so groß zu wählen ist, daß innerhalb einer vorgegebenen Zeit weniger als N/2 Zahlen als Marken erster Art vergeben werden. Wegen des periodischen Auftretens aller Zahlen muß nach beiden Richtungen ein ausreichend großer Abstand bestehen, um Eindeutigkeit zu erhalten. Mit der angegebenen Wahl von N können alle Zellen eindeutig in ihrer ursprünglichen Reihenfolge rekonstruiert werden, die bei der Vergabe der Nummern nicht weiter als die genannte vorgegebene Zeit auseinanderliegen. Diese Zeit muß dann zweckmäßigerweise so vorgegeben sein, daß, abgesehen von der zugelassenen Fehlerquote, sichergestellt ist, daß jede Zelle innerhalb dieser Zeit die letzten r Speicherplätze des Pufferspeichers 1 durchläuft. Als grober Anhaltspunkt für die vorzugebende Zeit kann das Doppelte der Differenz zwischen maximaler und minimaler Laufzeit zwischen Vergabe der Marken erster Art und der Ankunft in der Ausgangseinheit angenommen werden.

Die Marke zweiter Art, VCI, kennzeichnet die Zugehörigkeit einer Zelle zu einer bestimmten virtuellen Verbindung. Eine derartige Marke ist in der Regel ohnehin im Kopf einer Zelle enthalten und muß hier nur zur Auswertung zugänglich gemacht werden. Auf diese Marke kann dann, jedenfalls im Hinblick auf die vorliegende Erfindung, verzichtet werden, wenn die Marke erster Art an allen Eingängen des Systems synchron oder wenigstens plesiochron vergeben werden. Eine plesiochrone Vergabe von Marken erster Art würde zwar auch eine einheitliche Systemzeit erfordern, wegen der zulässigen Abweichungen wäre aber der Aufwand geringer als bei synchroner Vergabe.

Statt des Rests der Zelle, Data, kann im Pufferspeicher 1 auch die Adresse abgespeichert werden, unter der dieser Rest in einem anderen Speicher abgespeichert ist.

Der Pufferspeicher 1 ist in drei Teile untergliedert, nämlich einen schieberegisterartigen Teil, Shift Register, mit den Speicherplätzen 1 bis d und einen nach Art eines FIFO-Speichers betriebenen Teil, FIFO, der wieder aus zwei Teilen mit den Speicherplätzen d+1 bis r und r+1 bis p zusammengesetzt ist. Zumindest auf die Speicherplätze 1 bis r muß dabei einzeln derart zugegriffen werden können, daß ihr Inhalt gelesen werden kann oder daß in sie ein neuer Inhalt eingeschrieben werden kann.

Die Dimensionierung des Pufferspeichers, d.h. die Wahl der Zahlenwerte für d, r und p, muß im konkreten Anwendungsfall erfolgen. Berücksichtigt werden muß dabei vor allem die zulässige Fehlerrate, die minimale und maximale Laufzeit einer Zelle seit dem ersten Verzweigungspunkt, die Anzahl der gleichzeitig über eine Ausgangseinheit zugelassenen Verbindungen, die für eine Verbindung zugelassene minimale und maximale Zahl von Zellen pro Zeiteinheit und deren zulässige Schwankungsbreite. Als grober Anhaltspunkt können Werte von d = 128, r = 256 und p = 512 angesehen werden. Die Wahl des Wertebereichs für die Marken erster Art, Sequence Number, ist davon abhängig. Für die genannten Zahlenwerte und die verbindungsindividuelle Vorgabe dieser Marken kann N = 512 als Anhaltspunkt gelten. Die Wahl dieser Zahlenwerte ist insofern etwas unkritisch, als wegen der praktischen Realisierung Zweierpotenzen zu bevorzugen sind und außer bei der Wahl von d nur untere Grenzwerte zu berücksichtigen sind. Die untere Grenze bei der Wahl von d ergibt sich daraus, daß das Schieberegister eine Mindestverzögerung ergeben muß, die dem Laufzeitunterschied zwischen minimaler und maximaler Laufzeit entspricht. Da aber Verzögerungen an sich vermieden werden sollten, sollte dieser Wert auch nicht wesentlich überschritten werden.

Am Eingang der Ausgangseinheit ankommende Zellen, "Cells in", werden zunächst darauf untersucht, ob es am Ausgang auszugebende Zellen sind oder solche, die in der Ausgangseinheit enden. Dies sind einerseits Leerzellen, andererseits solche, die Steuersignale für die Ausgangseinheit (oder eine in der Regel damit verbundene Eingangseinheit, die anders nicht erreichbar ist) enthalten. Die auszugebenden Zellen werden in den Pufferspeicher 1 eingegeben und zwar derart, daß sie zunächst im dem nach Art eines FIFO-Speichers betriebenen Teil bis auf den untersten freien Speicherplatz "durchfallen". Immer, wenn am Ausgang eine Zelle ausgegeben wird, rücken im Pufferspeicher alle Zellen um einen Speicherplatz nach unten. Ist der letzte Speicherplatz des FIFO-Speichers, d+1, belegt, dann wird die darin enthaltene Zelle in den ersten Speicherplatz des Schieberegisters, d, übernommen. Ist der Speicherplatz d+1 leer, dann muß eine Leerzelle in den Speicherplatz d eingeschrieben werden. Die Aufenthaltsdauer jeder Zelle kann damit, zumindest relativ zu jeder anderen Zelle, aus ihrer Position im Pufferspeicher 1 abgeleitet werden. Die Ausgabe aus dem Pufferspeicher 1 wird unten beschrieben werden.

Die Speicherverwaltungseinheit 2 ist in Fig. 1 nur sehr schematisch dargestellt. Sie hat zunächst die Aufgabe, den bereits beschriebenen normalen Betrieb des Pufferspeichers 1 zu gewährleisten. Dies erfolgt durch Anlegen von Adressen, Address, Schreibbefehlen, W, und Lesebefehlen, R. Außerdem ist, in Fig. 1 nicht dargestellt, eine Information über das Vorhandensein oder Nichtvorhandensein einer einzuschreibenden Zelle erforderlich. Weiter hat die Speicherverwaltungseinheit 2 die Aufgabe, den Inhalt des vom Zähler 9 adressierten Speicherplatzes, Address, gegen den Inhalt des Zwischenspeichers 5b zu tauschen, wenn hierzu ein Befehl, Swap, gegeben wird.

Durch den Multiplexer 3 kann wahlweise auf den Inhalt eines der Speicherplätze 2 bis r des Pufferspeichers 1 zugegriffen und in den Zwischenspeicher 5a weitergegeben werden. Die Auswahl des Speicherplatzes erfolgt durch den Zähler 9, Address.

Durch den Multiplexer 4 wird am Anfang eines Ausgabezyklus der Inhalt des Speicherplatzes 1 des Pufferspeichers 1 in den Zwischenspeicher 5b übertragen. Dies ist der Fall, wenn der Zähler 9 zurückgesetzt wird, "=0". Durch einen besonderen Befehl, Swap, wird mittels des Multiplexers 4 der Inhalt des Zwischenspeichers 5a in den Zwischenspeicher 5b übernommen. Daß mittels desselben Befehls, Swap, in den zwischenspeicher 5b eingeschrieben und aus diesem ausgelesen wird, ist nichts ungewöhnliches und kann vom Fachmann durch übliche Maßnahmen berücksichtigt werden.

Durch den Vergleicher 6 werden die Marken zweiter Art, VCI, derjenigen beiden Zellen miteinander verglichen, die gerade in den Zwischenspeichern 5a und 5b gespeichert sind. Nur bei Gleichheit der beiden Marken zweiter Art, d.h. wenn die beiden Zellen derselben Verbindung angehören, wird der nachfolgende Vergleicher aktiviert.

Der Vergleicher 7 vergleicht die Marken erster Art, Sequence Number, der beiden in den Zwischenspeichern 5a und 5b enthaltenen Zellen. Zeigt der Vergleicher 6 an, daß beide Zellen derselben Verbindung angehören und wird festgestellt, daß die im Zwischenspeicher 5a enthaltene Zelle älter ist als die im Zwischenspeicher 5b enthaltene, so wird ein Befehl, Swap, abgegeben, durch den die ältere Zelle in den Zwischenspeicher 5b und die jüngere Zelle an deren Platz im Pufferspeicher 1 übernommen werden. Im Ergebnis werden damit die beiden Zellen vertauscht.

Der Zähler 9 sorgt für den richtigen zeitlichen Ablauf. Er zählt, mit einem vorgegebenen Takt T, periodisch von 2 bis r. Wird der Zähler 9 beim Zählerstand r zurückgesetzt, "=0", so wird ein Ausgabezyklus abgeschlossen und der nächste begonnen. Der Inhalt des Zwischenspeichers 5b, der im vorangegangenen Zyklus als die älteste zu einer bestimmten Verbindung gehörige Zelle erkannt wurde, wird in den Zwischenspeicher 8 übernommen und steht an dessen Ausgang, Cells out, zur Ausgabe zur Verfügung. Gleichzeitig wird der Inhalt des Speicherplatzes 1 des Pufferspeichers 1 über den Multiplexer 4 in den Zwischenspeicher 5b übernommen. Anschließend werden der Reihe nach die Speicherplätze 2 bis r auf ältere Zellen (Marken erster Art) derselben Verbindung (Marken zweiter Art) untersucht. Dazu wird der Inhalt jeweils über den Multiplexer 3 in den Zwischenspeicher 5a übernommen und mittels der Vergleicher 6 und 7 verglichen. Durch die oben beschriebenen Tauschaktionen, Swap, ist sichergestellt, daß beim Zählerstand r des Zählers 9 tatsächlich die älteste Zelle der betrachteten Verbindung im Zwischenspeicher 5b gespeichert ist und daß alle jüngeren Zellen dieser Verbindung noch oder wieder im Pufferspeicher 1 enthalten sind.

Wie schon kurz angedeutet, kann auf die Marke zweiter Art, VCI, und damit auch auf den Vergleicher 6 verzichtet werden, wenn alle Marken erster Art, Sequence Number, synchron oder wenigstens plesiochron vergeben werden. Dabei werden dann zwar Zellen gegeneinander vertauscht, die verschiedenen Verbindungen angehören, die richtige Reihenfolge der Zellen innerhalb der Verbindung wird aber dennoch gewährleistet. Auch wenn es ein Ziel der vorliegenden Erfindung ist, exakten Synchronismus und damit die Verwendung von Zeitmarken vermeiden zu können, so stellt die vorliegende Erfindung für diesen Fall eine alternative Lösung zur Verfügung.

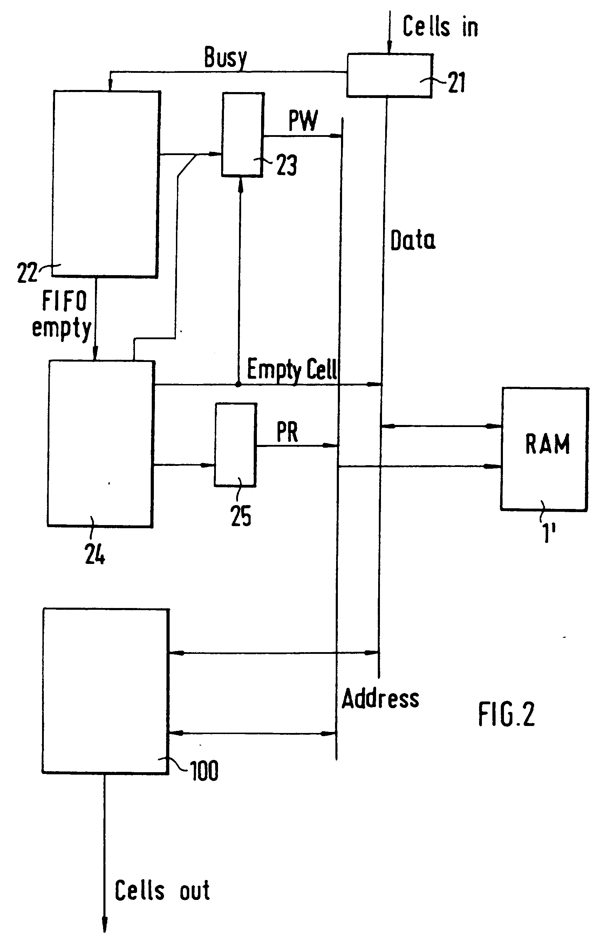

Die in Fig. 1 gewählte Darstellung der Ausgangseinheit zeigt vor allem die Funktionsweise der Ausgangseinheit. Der Aufbau und die Verwaltung des Pufferspeichers mit einem nach Art eines FIFO-Speichers betriebenen Teil und einem schieberegisterartig betriebenen Teil kommt deutlich in der in Fig. 2 gewählten Darstellung zum Ausdruck. Die Verteilung der Takte, einschließlich der Schreib- und Lesebefehle, ist hier nicht mit dargestellt.

Der Pufferspeicher ist durch einen Schreib-Lese-Speicher (RAM), 1', realisiert. Die ankommenden Zellen werden über einen Eingangsspeicher 21 auf einen Datenbus, Data, gegeben, an dem auch der Schreib-Lese-Speicher 1' angeschlossen ist. Eine Einschreibsteuerung 22 wird vom Eingangsspeicher 21 aktiviert, Busy, wenn eine einzuschreibende Zelle anliegt. Über den Einschreibzähler 23 wird eine Adresse PW über einen Adressbus, Address, an den Schreib-Lese-Speicher 1' angelegt und die Zelle in diesen eingeschrieben. Anschließend wird der Einschreibezähler 23 von der Einschreibsteuerung 22 aus inkrementiert. Eine Auslesesteuerung 24 gibt über einen Auslesezähler 25 die Adresse, PR, an, die dem Speicherplatz 1 entspricht. Nach jeder Ausgabe einer Zelle wird der Auslesezähler 25 von der Auslesesteuerung 24 aus inkrementiert. Der Unterschied zwischen dem Inhalt PW des Einschreibzählers 23 und dem Inhalt PR des Auslesezählers 25 muß immer mindestens gleich d sein. Dies wird von der Einschreibsteuerung 22 überwacht und, falls dies nicht so ist, FIFO empty, an die Auslesesteuerung 24 gemeldet, die dann an den Datenbus, Data, eine Leerzelle, Empty Cell, anlegt und das Einschreiben in den durch den Einschreibzähler 23 angegebenen Speicherplatz veranlaßt und anschließend den Einschreibzähler 23 inkrementiert.

Der Rest der Ausgangseinheit ist hier durch eine Zugriffs-, Vergleicher- und Ausgabeeinheit 100 dargestellt.

Abschließend sollen noch Beispiele für mögliche weitere Abwandlungen angegeben werden:

Bei der Suche nach der ältesten Zelle einer Verbindung muß nicht mehrmals eine relativ ältere Zelle gegen die eigentlich zur Ausgabe vorgesehene Zelle vertauscht werden. Es genügt, den ganzen vorgesehenen Speicherbereich durchzusuchen und sich nur Lage und Alter der jeweils ältesten gefundenen Zelle zu merken und dann am Ende des Suchvorgangs nur einmal zu tauschen.

Es ist auch möglich, überhaupt nicht zu tauschen und nur die älteste gefundene Zelle bei der Ausgabe vorzuziehen.

Der schieberegisterartig betriebene Teil des Pufferspeichers muß nicht zwingend dessen Ende bilden. Er kann auch am Anfang oder in der Mitte des Pufferspeichers liegen.

## Patentansprüche

1. Verfahren zum Wiederherstellen der richtigen Folge von Datenpaketen oder Zellen an einem Ausgang eines Systems, insbesondere einer ATM-Vermittlungsstelle, bei dem zwischen einer Eingangseinheit an einem Eingang des Systems und einer Ausgangseinheit an einem Ausgang des Systems zur selben Verbindung gehörige Zellen sich überholen können,
**dadurch gekennzeichnet,** daß in jeder Eingangseinheit Marken erster Art (Sequence Number) zur Kennzeichnung der Reihenfolge den Zellen beigefügt werden, daß in jeder Ausgangseinheit ein Pufferspeicher (1; 1') zum Puffern auszugebender Zellen vorhanden ist, daß für jede Zelle die Aufenthaltsdauer im Pufferspeicher feststellbar ist, daß die jeweils älteste im Pufferspeicher enthaltene Zelle zur Ausgabe vorgesehen wird, daß keine Ausgabe erfolgt, wenn die Aufenthaltsdauer dieser Zelle im Pufferspeicher kleiner als eine vorgegebene Mindestverzögerungszeit ist und daß anstelle der ältesten Zelle dann eine andere Zelle ausgegeben wird, wenn ein Vergleich unter Zuhilfenahme der Marken erster Art ergibt, daß die andere Zelle von der ältesten Zelle überholt wurde.

2. Verfahren nach Anspruch 1, dadurch gekennzeichnet, daß vor der Ausgabe einer anderen Zelle die bisher älteste Zelle an die Stelle der anderen Zelle tritt.

3. Verfahren nach Anspruch 1, dadurch gekennzeichnet, daß als Marken erster Art in Modulo-N-Zählweise gebildete Zahlen verwendet werden und daß N so groß gewählt ist, daß innerhalb einer vorgegebenen Zeit weniger als N/2 Zahlen als Marken erster Art vergeben werden.

4. Verfahren nach Anspruch 3, dadurch gekennzeichnet, daß für die Zellen jeder einzelnen Verbindung die Marken erster Art getrennt vergeben werden.

5. Verfahren nach Anspruch 3, dadurch gekennzeichnet, daß für die Zellen aller über eine Eingangseinheit geführten Verbindungen die Marken erster Art gemeinsam vergeben werden.

6. Verfahren nach Anspruch 1, dadurch gekennzeichnet, daß jeder Zelle eine Marke zweiter Art (VCI) zur Kennzeichnung der Zugehörigkeit zu einer bestimmten Verbindung beigefügt wird und daß in den Ausgangseinheiten anstelle der ältesten Zelle nur eine solche andere Zelle ausgegeben wird, deren Marke zweiter Art gleich ist wie die Marke zweiter Art der ältesten Zelle.

7. Verfahren nach Anspruch 1, dadurch gekennzeichnet, daß mindestens ein Teil (1 ... d) des Pufferspeichers (1)schieberegisterartig betrieben wird und damit die vorgegebene Mindestverzögerungszeit bewirkt.

8. Verfahren nach Anspruch 1, dadurch gekennzeichnet, daß die vorgegebene Mindestverzögerungszeit so gewählt wird, daß zwei Zellen, die in einer Eingangseinheit weiter als diese vorgegebene Mindestverzögerungszeit auseinanderliegen, sich vor ihrem Eintreffen in einer Ausgangseinheit nicht oder nur mit einer gerade noch zulässigen Fehlerwahrscheinlichkeit überholen können.

9. Ausgangseinheit für ein System, zum Wiederherstellen der richtigen Folge von Zellen am Ausgang des Systems, insbesondere für eine ATM-Vermittlungsstelle, **dadurch gekennzeichnet**, daß sie einen Pufferspeicher (1; 1') zum Puffern auszugebender Zellen aufweist, daß sie eine Zugriffseinrichtung (3; 100) aufweist als Mittel um auf jede im Pufferspeicher befindliche Zelle zuzugreifen und für jede Zelle die Aufenthaltsdauer im Pufferspeicher festzustellen und daß eine Vergleichseinrichtung (6, 7; 100) vorhanden ist, als Mittel, um jeweils zwei Zellen, auf die mittels der Zugriffseinrichtung zugegriffen wurde, anhand in den Zellen enthaltener Marken hinsichtlich der Reihenfolge ihres Eintritts in das System zu vergleichen.

10. Ausgangseinheit nach Anspruch 9, dadurch gekennzeichnet, daß eine Vertauschereinrichtung (2, 4, 5a, 5b; 100) vorhanden ist, mittels derer eine der zwei miteinander verglichenen Zellen im Pufferspeicher an die Stelle der anderen gesetzt werden kann.

## Claims

1. A method of restoring the correct sequence of data packets or cells at an output of a system, particularly of an ATM exchange, wherein between an input unit at an input of the system and an output unit at an output of the system, cells belonging to the same connection may overtake each other,
**characterized in** that in each input unit, labels of a first kind (Sequence Number) are added to the cells to identify the order of the cells, that each output unit includes a buffer (1; 1') for buffering cells to be output, that the residence time of each cell in the buffer is determinable, that the respective oldest cell contained in the buffer is intended for output, that no output takes place if the residence time of said cell in the buffer is shorter than a predetermined minimum delay, and that instead of the oldest cell, another cell is output if a comparison with the aid of the labels of a first kind indicates that the other cell was overtaken by the oldest cell.

2. A method as claimed in claim 1, characterized in that prior to the output of another cell, the hitherto oldest cell takes the place of the other cell.

3. A method as claimed in claim 1, characterized in that numbers formed by counting modulo N are used as the labels of a first kind, and that N is chosen to be so large that less than N/2 numbers are allocated as labels of a first kind within a predetermined time.

4. A method as claimed in claim 3, characterized in that the labels of a first kind are allocated separately to the cells of each connection.

5. A method as claimed in claim 3, characterized in that the labels of a first kind are allocated jointly to the cells of all connections routed via one input unit.

6. A method as claimed in claim 1, characterized in that a label of a second kind (VCI) is added to each cell to identify the connection to which the cell belongs, and that in the output units, another cell is output instead of the oldest cell only if its label of a second kind is equal to the label of a second kind of the oldest cell.

7. A method as claimed in claim 1, characterized in that at least a portion (1 ... d) of the buffer (1) is operated in the manner of a shift register, thus introducing the predetermined minimum delay.

8. A method as claimed in claim 1, characterized in that the predetermined minimum delay is chosen so that two cells which are separated by a time interval greater than said predetermined minimum delay in the input unit cannot overtake each other, or can only overtake each other with a just permissible error probability, before arriving at an output unit.

9. An output unit for a system for restoring the correct sequence of cells at the output of the system, particularly for an ATM exchange,
**characterized in** that it includes a buffer (1; 1') for buffering cells to be output, that it includes an access means (3; 100) for obtaining access to any cell contained in the buffer and for determining the residence time of each cell in the buffer, and that comparing means (6, 7; 100) are provided for comparing, with the aid of the labels contained in the cells, every two cells accessed by the access device to thereby determine the order in which the two cells entered the system.

10. An output unit as claimed in claim 9, characterized in that an interchange facility (2, 4, 5a, 5b; 100) is provided for putting one of the two compared cells in the place of the other in the buffer.

## Revendications

1. Méthode pour le rétablissement de la séquence correcte des paquets de données ou des cellules à une sortie d'un système, en particulier d'un central en mode de transmission asynchrone ATM, dans le cas de laquelle, entre une unité d'entrée à une entrée du système et une unité de sortie à une sortie du système, des cellules appartenant à une même liaison peuvent se dépasser,
caractérisée par le fait que dans chaque unité d'entrée on ajoute des marques du premier type (Sequence Number/numéro de séquence) pour caractériser la séquence des cellules, que dans cette unité de sortie existe une mémoire tampon (1; 1') pour mémoriser en mémoire tampon les cellules à sortir, que pour chaque cellule la durée de séjour en mémoire tampon peut se déterminer, que c'est la cellule chaque fois la plus ancienne contenue en mémoire tampon qui est prévue pour sortir, qu'aucune sortie ne se fait si la durée de séjour de cette cellule en mémoire tampon est inférieure à un temps de retard minimal prescrit et qu'au lieu de la cellule la plus ancienne c'est une autre cellule que l'on fait sortir si une comparaison effectuée à l'aide des marques du premier type indique que l'autre cellule avait été dépassée par la cellule la plus ancienne.

2. Méthode selon la revendication 1, caractérisée par le fait qu'avant la sortie d'une autre cellule, la cellule jusqu'ici la plus ancienne passe à la position de l'autre cellule.

3. Méthode selon la revendication 1, caractérisée par le fait qu'en tant que marques du premier type, on emploie des nombres formés selon le mode de comptage modulo-N et que l'on choisit N suffisamment grand pour qu'à l'intérieur d'un temps prescrit moins de N/2 nombres soient attribués comme marques du premier type.

4. Méthode selon la revendication 3, caractérisée par le fait que pour les cellules de chacune des différentes liaisons les marques du premier type sont attribuées séparément.

5. Méthode selon la revendication 3, caractérisée par le fait que pour les cellules de toutes les liaisons passant par l'unité d'entrée les marques du premier type sont attribuées en commun.

6. Méthode selon la revendication 1, caractérisée par le fait que, pour caractériser son appartenance à une liaison déterminée, on ajoute à chaque cellule une marque du second type (VCI/identificateur de circuit virtuel) et que dans les unités de sortie, au lieu de la cellule la plus ancienne, on ne fait sortir qu'une autre cellule dont la marque du second type est identique à la marque du second type de la cellule la plus ancienne.

7. Méthode selon la revendication 1, caractérisée par le fait qu'au moins une partie (1 ... d) de la mémoire tampon (1) est exploitée sous forme d'un registre à décalage et assure ainsi le temps de retard minimal prescrit.

8. Méthode selon la revendication 1, caractérisée par le fait que l'on choisit le temps de retard minimal prescrit de façon que deux cellules, qui, dans une unité d'entrée, sont situées à une distance l'une de l'autre supérieure à ce temps de retard minimal prescrit, ne puissent pas se dépasser avant leur arrivée dans une unité de sortie ou seulement avec une probabilité d'erreur justement encore autorisée.

9. Unité de sortie pour un système pour rétablir la séquence correcte des cellules à la sortie du système, en particulier pour un central ATM, caractérisée par le fait qu'elle présente une mémoire tampon (1; 1') pour mémoriser en mémoire tampon des cellules à faire sortir, qu'elle présente un dispositif d'accès (3; 100) comme moyen pour accéder à chacune des cellules qui se trouve en mémoire tampon et pour déterminer pour chaque cellule la durée de ce séjour en mémoire tampon et qu'il existe un dispositif de comparaison (6, 7; 100) comme moyen pour comparer chaque fois deux cellules, auxquelles on a accédé au moyen du dispositif d'accès, à l'aide de marques contenues dans les cellules, en ce qui concerne la séquence de leur entrée dans le système.

10. Unité de sortie selon la revendication 9, caractérisée par le fait qu'il existe un dispositif d'échange (2, 4, 5a, 5b; 100) au moyen duquel on peut placer en mémoire tampon, à la place de l'autre, l'une des deux cellules comparées l'une à l'autre.
